# EUROPEAN PATENT APPLICATION

(11) **EP 2 852 026 A1**
(43) Date of publication of application: **25.03.2015**
(21) Application number: 13790770.5
(22) Date of filing: 13.05.2013
(51) Int. Cl.: H02J 17/00, H02J 7/00

(54) **PORTABLE TERMINAL CHARGING APPARATUS AND VEHICLE**

(30) Priority: 17.05.2012 JP 2012113265
(71) Applicant: Panasonic Intellectual Property Management Co., Ltd., Osaka-shi, Osaka 540-6207 (JP)
(72) Inventor: NAKAYAMA, Tsukasa, Osaka 540-6207 (JP); ARAKI, Yukihiro, Osaka 540-6207 (JP); SEKI, Toshiaki, Osaka 540-6207 (JP)
(74) Representative: Vigand, Philippe
(86) International application number: PCT/JP2013/003059
(87) International publication number: WO 2013/172016

(57) **Abstract**

A portable terminal charging apparatus for charging a portable terminal includes a body case which has a portable terminal mounting plate and is disposed on an upper face thereof, a charging coil which is movably provided in the body case opposed to a lower face side of the portable terminal mounting plate, driving unit for moving the charging coil so as to be opposed to the lower face side of the portable terminal mounting plate, and controller which is connected to the driving unit and the charging coil. The charging coil is provided with a support leg which is extended downward.

## Description

### Technical Field

The present invention relates to a portable terminal charging apparatus for charging a portable terminal such as a mobile phone, and a vehicle.

### Background Art

As faculties of a portable terminal such as a mobile phone are enhanced, consumption of electric power of the portable terminal has been increased.

Therefore, it is required to charge the portable terminal in many places including an interior of a vehicle. As a recent tendency, a so-called non-contact charge without using a cable has been in the limelight.

A portable terminal charging apparatus capable of performing the non-contact charge complying with the request is disclosed, for example, in Patent Document 1.

A charging table described in Patent Document 1 includes a power supply coil which is connected to an alternating current supply for inducing an electromotive force to an induction coil, a case which incorporates this power supply coil and has an upper surface plate for carrying a battery containing apparatus thereon, a moving mechanism which is incorporated in this case and moves the power supply coil along an inner face of the upper surface plate, and a position detecting controller which detects a position of the battery containing apparatus placed on the upper surface plate, and controls the moving mechanism thereby to move the power supply coil close to the induction coil of the battery containing apparatus.

### Prior Art Document

### Patent Document

Patent Document 1: JP-A-2009-247194

### Summary of the Invention

### Problems that the Invention is to Solve

In the charging table disclosed in the above described Patent Document 1, it is possible to perform efficient charge, because the charge is conducted in a state where the power supply coil has been moved to the position of the battery containing apparatus which is placed on the upper surface plate.

In a portable terminal charging apparatus which is so specified as to place a portable terminal on an upper face of the portable terminal mounting plate, like the charging table in Patent Document 1, the position on the upper face of the portable terminal mounting plate where the portable terminal is placed is not constant. For this reason, it is necessary for the portable terminal charging apparatus which is so specified to be provided with driving unit for moving a charging coil so as to correspond to the position where the portable terminal is placed.

However, in such a structure that the driving unit is provided on a lower face of the portable terminal mounting plate, a space for installing the driving unit is required below the portable terminal mounting plate. In the structure having such space, rigidity of the portable terminal mounting plate is deteriorated, and therefore, there is such anxiety that the portable terminal mounting plate and the driving unit provided below may be damaged, when an excessive load is applied, by mistake, to the portable terminal mounting plate.

Further, the portable terminal mounting plate cannot be formed of a metal plate having rigidity, because it is necessary to pass a magnetic flux from the charging coil. Moreover, although the portable terminal mounting plate may be formed of synthetic resin or ceramic, the portable terminal mounting plate cannot be formed thick, for enabling a distance between the charging coil and the portable terminal to be short. Consequently, it is impossible to enhance the rigidity of the portable terminal mounting plate, and hence, the portable terminal mounting plate and the charging coil provided below may be damaged, in some cases, when an excessive load is applied, by mistake, to the portable terminal mounting plate.

An object of the invention is to provide a portable terminal charging apparatus in which damage of a portable terminal mounting plate can be restrained, and a vehicle.

### Means for solving the Problems

According to the invention, there is provided a portable terminal charging apparatus including a body case which has a portable terminal mounting plate and is disposed on an upper face thereof, a charging coil which is movably provided in the body case opposed to a lower face side of the portable terminal mounting plate, driving unit for moving the charging coil so as to be opposed to the lower face side of the portable terminal mounting plate, and controller which is connected to the driving unit and the charging coil, wherein the charging coil is provided with a support leg which is extended downward.

### Advantage of the Invention

According to the invention, it is possible to restrain damage of the portable terminal mounting plate, because the invention includes the body case having the portable terminal mounting plate disposed on the upper face thereof, the charging coil which is movably provided in the body case opposed to the lower face side of the portable terminal mounting plate, the driving unit for moving the charging coil so as to be opposed to the lower face side of the portable terminal mounting plate, and the controller which is connected to the driving unit and the charging coil, wherein the charging coil is provided with the support leg which is extended downward.

Specifically, because the charging coil is provided with the support leg which is extended downward, the excessive load applied to the portable terminal mounting plate is supported by the support leg. As the results, it is possible to restrain the damage of the portable terminal mounting plate.

### Brief Description of the Drawings

Fig. 1 is a perspective view showing a portable terminal charging apparatus in an embodiment according to the invention, in a state provided in a vehicle room of a vehicle.
Fig. 2 is a perspective view of the portable terminal charging apparatus in the embodiment.
Fig. 3 is a perspective view of the portable terminal charging apparatus in the embodiment, having a portable terminal placed thereon.
Fig. 4 is a perspective view of the portable terminal charging apparatus in the embodiment, in a state where a part of the device is removed.
Fig. 5 is a plan view of the portable terminal charging apparatus in the embodiment, in a state where a part of the device is removed.
Fig. 6 is a sectional view of the portable terminal charging apparatus in the embodiment.
Fig. 7 is a perspective view of the portable terminal charging apparatus in the embodiment, in a state where a part of the device is removed.
Fig. 8 is a plan view of the portable terminal charging apparatus in the embodiment, in a state where a part of the device is removed.
Fig. 9 is a control block diagram of the portable terminal charging apparatus in the embodiment.
Fig. 10 is a flow chart showing operation of the portable terminal charging apparatus in the embodiment.

### Mode for Carrying Out the Invention

Now, an embodiment of the invention will be described referring to the attached drawings.

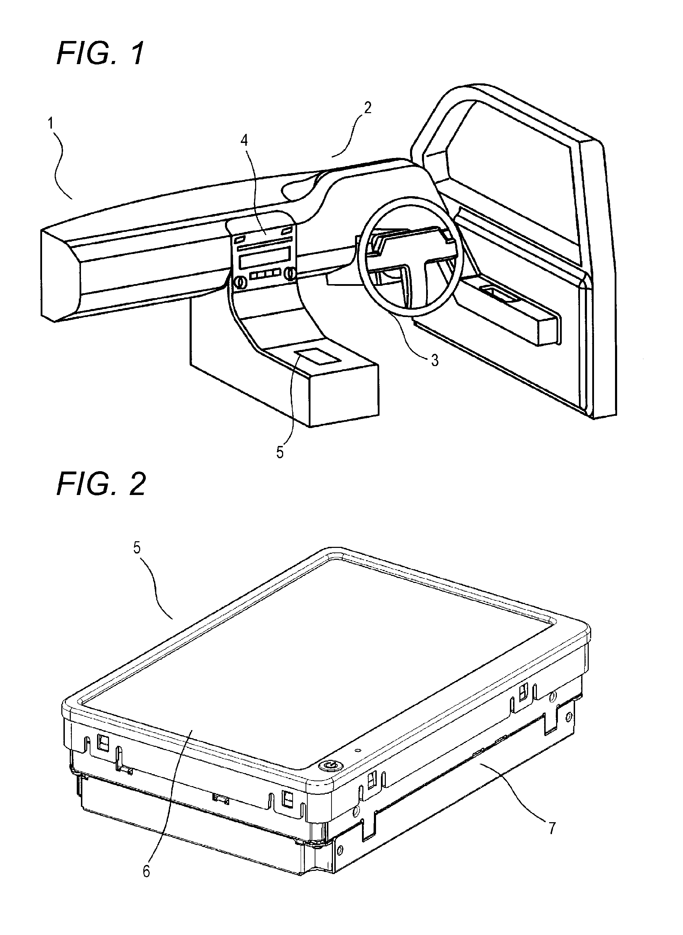

Fig. 1 is a perspective view showing a portable terminal charging apparatus in an embodiment, in a state provided in a vehicle room of a vehicle. As shown in Fig. 1, a handle 3 is provided in a front part in a vehicle room 2 of a vehicle 1.

Moreover, an electronic apparatus 4 for reproducing music or image, and for displaying image for car navigation is provided at a lateral side of the handle 3.

Further, a portable terminal charging apparatus 5 is provided in rear of the electronic apparatus 4 in the vehicle room 2.

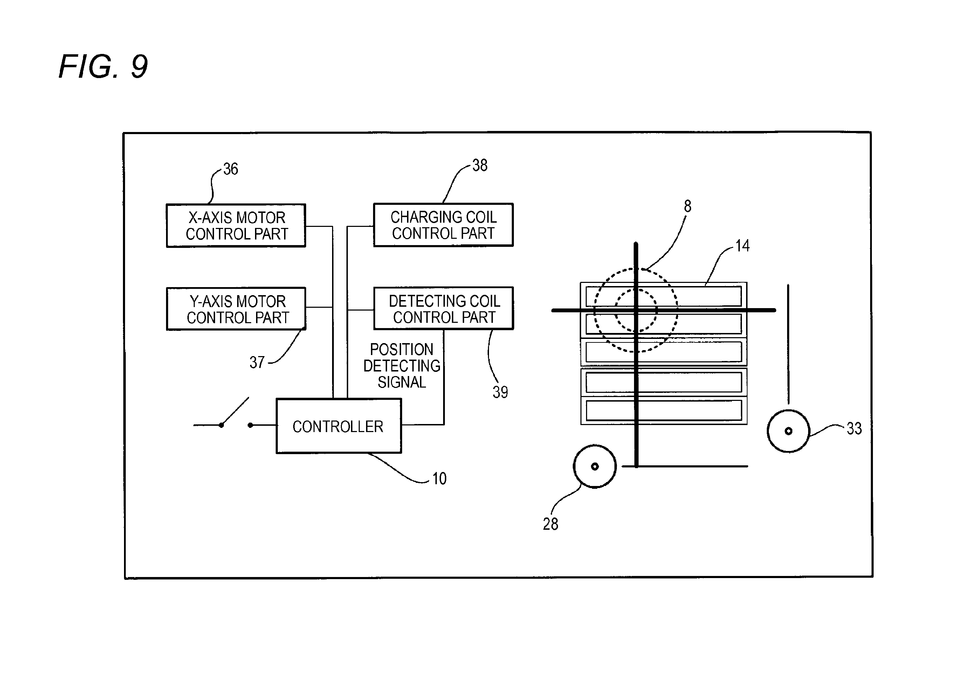

Figs. 2 to 8 are perspective views, plan views and sectional views of the portable terminal charging apparatus 5. The portable terminal charging apparatus 5 includes a body case 7 in a box-like shape having a portable terminal mounting plate 6 disposed on an upper face thereof, a charging coil 8 which is movably provided in the body case 7 opposed to a lower face side of the portable terminal mounting plate 6, driving unit 9 for moving the charging coil 8 so as to be opposed to the lower face side of the portable terminal mounting plate 6, and a controller which is denoted with numeral 10 in Fig. 9, and connected to the driving unit 9 and the charging coil 8. Fig. 9 is a control block diagram of the portable terminal charging apparatus in the embodiment.

Respective constituent elements of the portable terminal charging apparatus 5 will be specifically described below.

The portable terminal mounting plate 6 will be described.

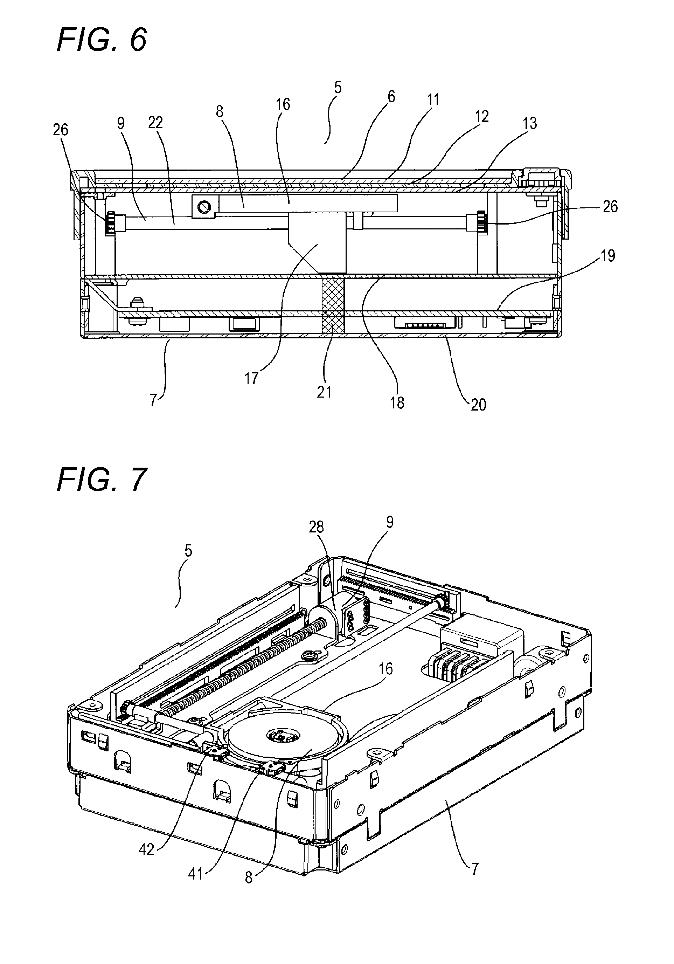

As shown in Fig. 6, the portable terminal mounting plate 6 is configured by superposing a surface plate 11, a middle plate 12, and a backside plate 13 on each other.

The surface plate 11 and the backside plate 13 are formed of synthetic resin. The middle plate 12 is formed of ceramic. Therefore, a magnetic flux from the charging coil 8 can penetrate the portable terminal mounting plate 6 in a direction of a portable terminal 15.

Moreover, a position detecting coil 14 which is shown in Fig. 9 is provided on a surface of the middle plate 12.

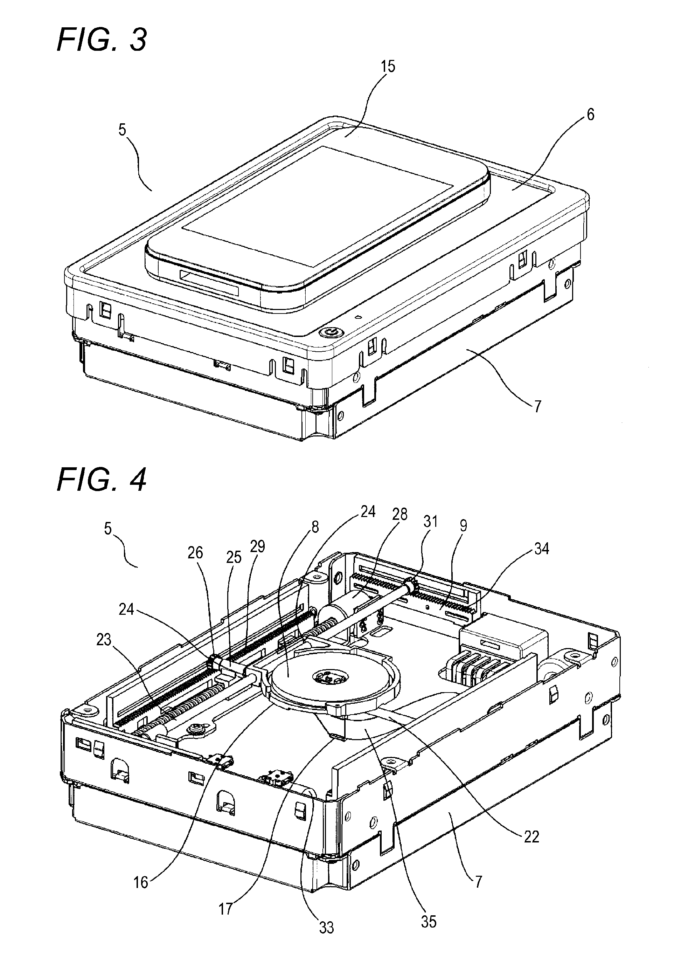

The position detecting coil 14 is a constituent element similar to the position detecting coil which is provided on the charging table in the above described Patent Document 1 (JP-A-2009-247194). Specifically, the position detecting coil 14 is provided for the purpose of detecting at which position on an upper face of the portable terminal mounting plate 6 the portable terminal 15 is placed, when the portable terminal 15 is placed on the portable terminal mounting plate 6, as shown in Fig. 3.

In this embodiment, detection is made, using the position detecting coil 14, as to at which position on the upper face of the portable terminal mounting plate 6 the portable terminal 15 is placed, and then, the driving unit 9 moves the charging coil 8 to a position of an induction coil (not shown) of the portable terminal 15. Structure and operation similar to the above are described in detail in Patent Document 1 (JP-A-2009-247194).

Then, the charging coil 8 and its related parts will be described.

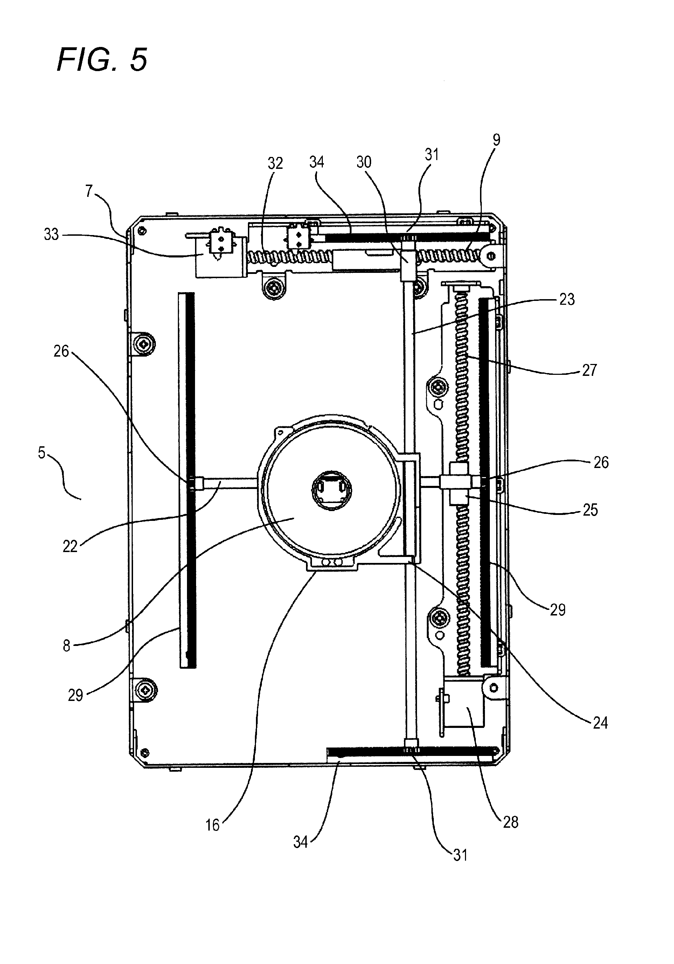

As can be understood from Figs. 4 and 5, the charging coil 8 is formed of a lead wire having a plurality of windings wound into an annular shape. The charging coil 8 is held in a state covered with a holding body 16 which is formed of synthetic resin, at an outer peripheral side and a lower face side thereof.

Moreover, as shown in Fig. 6, a support leg 17 is provided on a lower face of the holding body 16 so as to extend toward a lower side of the charging coil 8. The support leg 17 is formed of synthetic resin, and integrally formed with the holding body 16.

Moreover, a gap of 0.3mm is provided between a lower face of the support leg 17 and an upper face of a support plate 18 which is formed of metal and disposed below the support leg 17, as shown in Fig. 6. As the results, in an ordinary state, the lower face of the support leg 17 will not come into contact with the upper face of the support plate 18, while the charging coil 8 moves.

As described above, the support leg 17 is provided below the charging coil 8, in this embodiment.

Further, as shown in Fig. 6, a control board 19 and a lower plate 20 of the body case 7 are disposed below the support plate 18. A support body 21 passing through the control board 19 is provided between a lower face of the support plate 18 and an upper face of the lower plate 20.

Then, the driving unit 9 will be described.

As shown in Figs. 4 and 5, the driving unit 9 has an X-axis direction driving shaft 22 and a Y-axis direction driving shaft 23. A longitudinal direction of the X-axis direction driving shaft 22 is an X-axis direction, and a longitudinal direction of the Y-axis direction driving shaft 23 is a Y-axis direction. Respective intermediate portions of the X-axis direction driving shaft 22 and the Y-axis direction driving shaft 23 are engaged with the holding body 16, at positions outside a part for holding the charging coil 8 in the holding body 16.

Specifically, the holding body 16 is provided with a through hole (not shown) which the X-axis direction driving shaft 22 passes through, and a through hole 24 which the Y-axis direction driving shaft 23 passes through. The X-axis direction driving shaft 22 and the Y-axis direction driving shaft 23 which pass through the respective through holes are provided in a state crossed with each other having a predetermined distance in a vertical direction thereby to be engaged with the holding body 16.

The X-axis direction driving shaft 22 is provided with a worm wheel 25 and a gear 26 at its one end, and another gear 26 at the other end.

The worm wheel 25 is engaged with a worm 27, and the worm 27 is connected to a motor 28.

Moreover, the gears 26 at both ends are respectively engaged with gear plates 29.

Accordingly, when the motor 28 is driven, the worm 27 rotates, and along with the rotation of the worm 27, the worm wheel 25 moves in the X-axis direction together with the X-axis direction driving shaft 22. In this manner, the charging coil 8 moves in the X-axis direction.

The Y-axis direction driving shaft 23 is provided with a worm wheel 30 and a gear 31 at its one end, and another gear 31 at the other end.

The worm wheel 30 is engaged with a worm 32, and the worm 32 is connected to a motor 33.

Moreover, the gears 31 at both ends are respectively engaged with gear plates 34.

Accordingly, when the motor 33 is driven, the worm 32 rotates, and along with the rotation of the worm 32, the worm wheel 30 moves in the Y-axis direction together with the Y-axis direction driving shaft 23. In this manner, the charging coil 8 moves in the Y-axis direction.

Denoted with reference numeral 35 in Fig. 4 is a flexible wire for electrifying the charging coil 8. An end of the flexible wire 35 is fixed to a side face of the aforesaid support leg 17.

Moreover, as shown in Fig. 9, the motor 28 is connected to the controller 10 by way of an X-axis motor control part 36, and the motor 33 is connected to the controller 10 by way of a Y-axis motor control part 37.

Moreover, the charging coil 8 is connected to the controller 10 by way of a charging coil control part 38, and the position detecting coil 14 is connected to the controller 10 by way of a detecting coil control part 39.

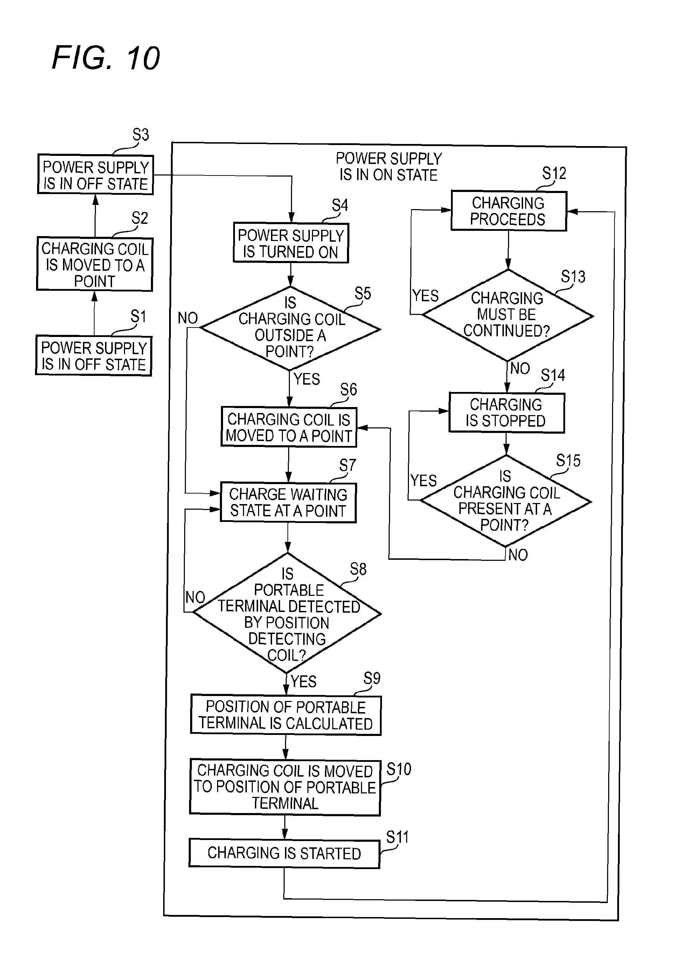

In the structure as described above, in this embodiment, when a power supply switch 40 is turned off (S1 in Fig. 10), the charging coil 8 is moved to a center (hereinafter referred to as "A point") of the body case 7 (S2 in Fig. 10), as shown in Figs. 4 to 6, and thereafter, the power supply is brought into an off state (S3 in Fig. 10).

Specifically, in a state where the portable terminal 15 is not placed on the portable terminal mounting plate 6 of the body case 7, as shown in Fig. 2, the portable terminal mounting plate 6 is in a state exposed to the vehicle room 2, as shown in Fig. 1.

For this reason, it may sometimes happen that a user erroneously puts his hand on the portable terminal mounting plate 6. On such occasion, the portable terminal mounting plate 6 is subjected to an excessive load.

In view of the above, in this embodiment, the charging coil 8 is moved to the center of the body case 7, as shown in Figs. 4 to 6. As the results, the charging coil 8, the holding body 16, the support leg 17 and the support plate 18 support the above described excessive load.

In a state where the portable terminal mounting plate 6 is subjected to the excessive load, as described above, the portable terminal mounting plate 6 is curved downward although a little. In this state, the charging coil 8, the holding body 16, and the support leg 17 are also moved downward, and the lower face of the support leg 17 comes into contact with the upper face of the support plate 18.

As the results, the above described excessive load is supported by the support plate 18 through the portable terminal mounting plate 6, the charging coil 8, the holding body 16, and the support leg 17. In this manner, it is possible to restrain damage of the portable terminal mounting plate 6 and the charging coil 8.

Moreover, in this embodiment, for the purpose of enhancing rigidity against the excessive load, the lower face side of the support plate 18 is supported by the lower plate 20 of the body case 7 by way of the support body 21.

When the excessive load is removed, the portable terminal mounting plate 6 is resiliently restored upward, and the charging coil 8 and the holding body 16 are also restored upward by resilience of the X-axis direction driving shaft 22 and the Y-axis direction driving shaft 23. Consequently, the lower face of the support leg 17 is brought into a state disposed on the upper face of the support plate 18 having a gap between them.

As the results, the movement of the charging coil 8 will not be hindered after the restoration.

Moreover, when the portable terminal 15 is charged, the power supply switch 40 is turned on (S4 in Fig. 10) as a first step, and at the same time, the portable terminal 15 is placed on the upper face of the portable terminal mounting plate 6.

In this embodiment, even under such condition, whether or not the charging coil 8 is present at the A point is first confirmed by the controller 10 (S5 in Fig. 10).

This confirmation can be judged from respective driving amounts of the motors 28 and 33 which are stored in the X-axis motor control part 36 and the Y-axis motor control part 37.

In case where it is judged that the charging coil 8 is not present at the A point, the charging coil 8 is moved to the A point (S6 in Fig. 10), and brought into a charge waiting state at this A point (S7 in Fig. 10).

Then, the controller 10 detects at which position on the upper face of the portable terminal mounting plate 6 the portable terminal 15 is placed, by the same operation as disclosed in the above described Patent Document 1 (JP-A-2009-247194), using the position detecting coil 14 (S8 to S9 in Fig. 10).

It is to be noted that the position where the portable terminal 15 is placed is, in fact, a position of an induction coil (not shown) which is contained in the portable terminal 15.

Thereafter, the controller 10 drives the motors 28 and 33 by way of the X-axis motor control part 36 and/or the Y-axis motor control part 37 thereby to move the charging coil 8 to the detected position of the induction coil (not shown) which is contained in the portable terminal 15 (S10 in Fig. 10). Thereafter, the controller 10 starts to charge by way of the charging coil control part 38 (S11 to S12 in Fig. 10).

During the charge, the controller 10 judges whether or not the charge must be continued (whether or not the charge has been completed), by the same operation as disclosed in the above described Patent Document 1 (JP-A-2009-247194) (S13 in Fig. 10). When the charge has been completed (fully charged), the controller 10 finishes the charging operation (S14 in Fig. 10).

After the charging operation has been completed, the controller 10 confirms whether or not the charging coil 8 is present at the A point (S15 in Fig. 10), and then, returns the charging coil 8 to the A point (S6 in Fig. 10).

This confirmation can be judged from the respective driving amounts of the motors 28 and 33 which are stored in the X-axis motor control part 36 and the Y-axis motor control part 37.

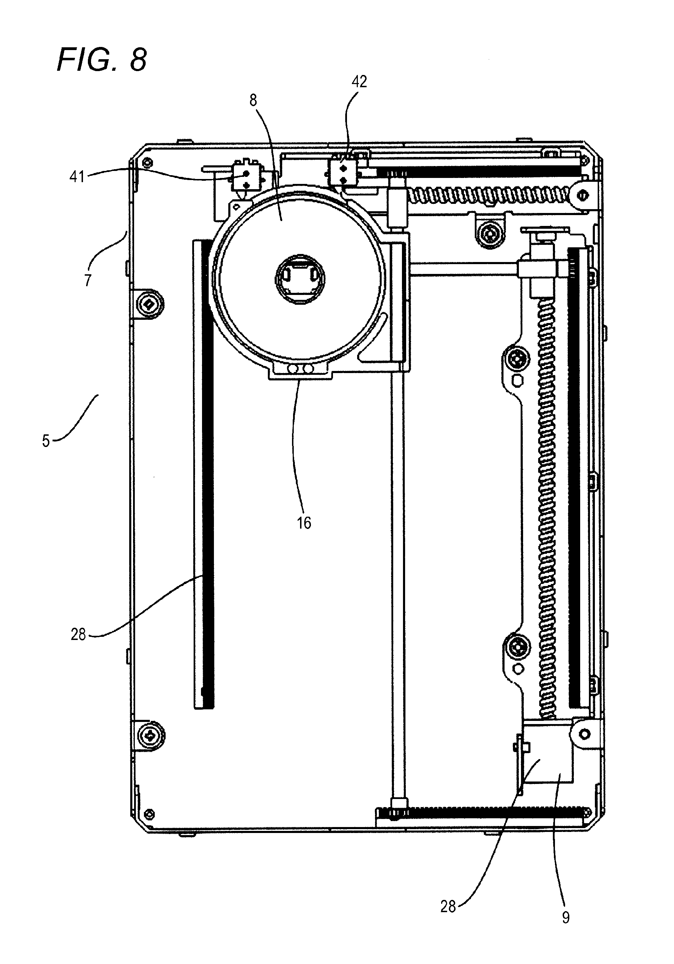

In case where the charging coil 8 cannot be returned to the A point by the controller 10, for example, in case where the position which is calculated from the respective driving amounts of the motors 28 and 33 which are stored in the X-axis motor control part 36 and the Y-axis motor control part 37 is deviated from an actual position which is measured by the position detecting coil 14, the controller 10 conducts such operation as bringing the charging coil 8 into the states as shown in Figs. 7 and 8.

Specifically, the controller 10 drives the motors 28 and 33 by way of the X-axis motor control part 36 and the Y-axis motor control part 37 thereby to move the charging coil 8 to a corner part in the body case 7, as shown in Figs. 7 and 8.

Switches 41, 42 are provided in this corner part. When the charging coil 8 has moved to this corner part in the body case 7, the switches 41, 42 are operated. On this occasion, the controller 10 judges that the charging coil 8 has moved to the initial position.

In this state, the respective driving amounts of the motors 28 and 33 by the X-axis motor control part 36 and the Y-axis motor control part 37 are set at initial values. The controller 10 controls again the position of the charging coil 8 from this state.

Although the invention has been described in detail and referring to a specified embodiment, it is apparent to those skilled in the art that various modifications and amendments can be added within a scope not deviating from the spirit of the invention.

This application is based on Japanese Patent Application (Application No. 2012-113265) filed on May 17, 2012, the contents of which are hereby incorporated by reference.

### Industrial Applicability

In this invention, the charging coil is provided with the support leg which is extended downward, and therefore, the excessive load applied to the portable terminal mounting plate can be supported by way of the support leg. As the results, it is possible to restrain damage of the portable terminal mounting plate.

Therefore, the invention is useful as the portable terminal charging apparatus for use at home or on vehicle.

### Description of the Reference Numerals and Signs

- 1: Vehicle
- 2: Vehicle room
- 3: Handle
- 4: Electronic apparatus
- 5: Portable terminal charging apparatus
- 6: Portable terminal mounting plate
- 7: Body case
- 8: Charging coil
- 9: Driving unit
- 10: Controller
- 11: Surface plate
- 12: Middle plate
- 13: Backside plate
- 14: Position detecting coil
- 15: Portable terminal
- 16: Holding body
- 17: Support leg
- 18: Support plate
- 19: Control board
- 20: Lower plate
- 21: Support body
- 22: X-axis direction driving shaft
- 23: Y-axis direction driving shaft
- 24: Through hole
- 25: Worm wheel
- 26: Gear
- 27: Worm
- 28: Motor
- 29: Gear plate
- 30: Worm wheel
- 31: Gear
- 32: Worm
- 33: Motor
- 34: Gear plate
- 35: Flexible wire
- 36: X-axis motor control part
- 37: Y-axis motor control part
- 38: Charging coil control part
- 39: Detecting coil control part
- 40: Power supply switch
- 41: Switch
- 42: Switch

## Claims

1. A portable terminal charging apparatus comprising,
a body case having a portable terminal mounting plate disposed on an upper face thereof;
a charging coil which is movably provided in the body case and is opposed to a lower face side of the portable terminal mounting plate;
a driving unit which moves the charging coil so as to be opposed to the lower face side of the portable terminal mounting plate; and
a controller which is connected to the driving unit and the charging coil,
wherein the charging coil is provided with a support leg which is extended downward.

2. The portable terminal charging apparatus according to claim 1, wherein a gap is formed between a lower face of the support leg and an upper face of a support plate which is disposed below the support leg.

3. The portable terminal charging apparatus according to claim 2, further comprising:
a holding body which is formed of synthetic resin and covers an outer peripheral part and a lower face part of the charging coil,
wherein the support leg is integrally formed with the holding body at a lower face side of the holding body.

4. The portable terminal charging apparatus according to claim 3, wherein the driving unit is connected to the outer peripheral part of the charging coil of the holding body.

5. The portable terminal charging apparatus according to claim 4, wherein the driving unit includes an X-axis direction driving shaft and a Y-axis direction driving shaft; and
wherein the X-axis direction driving shaft and the Y-axis direction driving shaft are engaged with the holding body, outside a part for holding the charging coil in the holding body.

6. The portable terminal charging apparatus according to any one of claims 3 to 5, wherein the support plate which is disposed below the support leg is formed of metal.

7. The portable terminal charging apparatus according to claim 6, wherein a lower plate of the body case is disposed below the support plate; and
wherein a support body is provided between a lower face of the support plate and an upper face of the lower plate.

8. The portable terminal charging apparatus according to any one of claims 1 to 7, wherein after a portable terminal which is placed on the portable terminal mounting plate has been charged, the controller moves the charging coil to a center part of the portable terminal mounting plate.

9. A vehicle which is provided with the portable terminal charging apparatus according to any one of claims 1 to 8, in a vehicle room thereof.
